# EUROPÄISCHE PATENTSCHRIFT

(11) **EP 2 669 004 B1**
(45) Veröffentlichungstag und Bekanntmachung des Hinweises auf die Patenterteilung: **06.07.2022**
(21) Anmeldenummer: 13168905.1
(22) Anmeldetag: 23.05.2013
(51) Int. Cl.: B01J 23/34, B01J 35/00, B01J 35/04, B01J 37/00, B01J 37/04, B01J 23/656, B01J 23/889, B01D 53/66, A61L 9/00, F24F 3/12

(54) **Ozonzersetzendes Katalysatorsystem und Verfahren zur Herstellung**
Ozone-decomposing catalyst system and process for production
Système de catalyseur décomposeur d'ozone et son procédé de fabrication

(30) Priorität: 01.06.2012 DE 102012209261
(43) Veröffentlichungstag der Anmeldung: 04.12.2013
(73) Patentinhaber: BSH Hausgeräte GmbH, 81739 München (DE)
(72) Erfinder: Biessei, Jörg, 13469 Berlin (DE); Doye, Christian, 13156 Berlin (DE); Schneider, Manuela, 13581 Berlin (DE)

(56) Entgegenhaltungen:
- EP-A1- 0 398 766
- EP-A1- 0 403 984
- WO-A1-96/34686
- DE-A1- 2 927 246
- DE-A1- 2 936 927
- DE-A1- 4 223 662
- DE-A1-102014 002 751

## Beschreibung

Die Erfindung bezieht sich auf ein Katalysatorsystem mit einer wabenförmigen Struktur zur Zersetzung von Ozon, ein Verfahren zum Herstellen des Katalysatorsystems, sowie dessen Verwendung in einer Filtervorrichtung.

### Stand der Technik:

Ozon ist ein bei Raumtemperatur / Normaldruck gasförmiges Molekül, das aus drei Sauerstoffatomen besteht und als starkes Oxidationsmittel wirkt. Aufgrund seiner oxidierenden Wirkung reizt es bei Menschen und Tieren die Atemwege. Bei Ozonaufnahme treten beim Betroffenen häufig Kopfschmerzen auf. In hohen Konzentrationen riecht das Gas aufgrund der oxidierenden Wirkung auf die Nasenschleimhaut charakteristisch stechend-scharf bis chlorähnlich, während es in geringen Konzentrationen geruchlos ist. Die Geruchsschwelle liegt bei 40 µg/m³.

Ozon dient bekanntermaßen zur Reinigung von technischen Geräten sowie zur Wasseraufbereitung, da es durch sein hohes Oxidationspotential in der Lage ist, eine Vielzahl von Mikroorganismen abzutöten. Weiter sind Raumluftionisatoren bekannt, die Ozon verwenden, um Gerüche in der Umgebungsluft zu spalten und zu eliminieren. Insbesondere wird Ozon in Haushaltsgeräten wie Backöfen oder Dunstabzugshauben zur Sterilisation sowie zur Eliminierung von schlechten Gerüchen eingesetzt.

Ozon kann technisch auf verschiedene Arten hergestellt werden, z.B. elektrochemisch oder durch photochemische Spaltung von Sauerstoffmolekülen. Ozon kann als Nebenprodukt z.B. in Photokopierern entstehen. Eine Ozonbildung erfolgt auch bei der pyrolytischen Reinigung von Haushaltsgeräten, wie Backöfen, die bei Temperaturen von 300 bis 500 °C durchgeführt wird.

In allen Fällen und insbesondere bei Haushaltsgeräten ist es nötig, das entstandene Ozon vor zu entfernen, um eine Geruchsbelastung bzw. gesundheitliche Gefährdung der Personen in der Umgebung zu minimieren.

Im Stand der Technik sind Katalysatoren bekannt, die eine ozonzersetzende Wirkung haben, und den Abbau von Ozon beschleunigen. Heterogene Katalysatoren werden in der Regel auf keramische Träger aufgebracht, um eine gute mechanische und thermische Stabilität zu erzielen. Diese keramischen Träger können z.B. eine Honigwabenstruktur besitzen, wie in US 4,483,940 gezeigt wird. Weiter ist bekannt zum Ozonabbau einen Aktivkohlefilter zu verwenden, der als Reduktionsmittel dient, und die ebenfalls eine ozonzersetzende Wirkung besitzt.

Dokument WO 96/34686 A1 offenbart die Herstellung eines Ozonzersetzenden Filters mit einem chemisch reaktiven Substrat, umfassend eine hochporöse, orientierte und expandierte Polytetrafluoroethylenmatrix, umfassend polymere Knötchen, die mit Fibrillen verbunden sind, sowie Katalysatorpartikel in der PTFE-Matrix, wobei die PTFE-Matrix ausreichend porös ist, so dass die Katalysatorpartikel ohne weiteres mit einem Fluidstrom reagieren können.

Dokument EP 0 398 66 A1 zeigt ein ozonzersetzendes Reaktorelement, umfassend ein Substrat, das als Träger für einen ozonzersetzenden Katalysator und ein elektroleitfähiges Material dient, sowie Elektroden, die am Substrat angebracht sind, um das Reaktorelement zu elektrifizieren, so dass bei erhöhten Temperaturen Ozon zersetzt wird. In Ausführungsformen ist das Substrat luftdurchlässig und kann z.B. ein keramischer Schaum oder ein Schaum aus einem synthetischen Harz sein. Der Ozonzersetzungskatalysator kann aus verschiedenen Metalloxiden oder Metallen ausgewählt sein.

Dokument EP 0 403 984 A1 bezieht sich auf Trägerkatalysatoren zur Zersetzung von Ozon bei erhöhten Temperaturen, umfassend ein Trägermaterial und eine katalytisch aktive Komponente, welcher ein oder mehrere Metalle und/oder ein oder mehrere Metalloxide enthält. Das Trägermaterial ist ein geschäumtes, im Wesentlichen offenporiges organisches Polymer, das mit der katalytisch aktiven Komponente beschichtet ist. In Ausführungsformen ist die katalytisch aktive Komponente z.B. Mangandioxid und das Polymer ein Polymer auf Polyurethanbasis.

Die herkömmlichen Katalysatorsysteme zur Ozonzersetzung sind aber bezüglich ihres katalytischen Wirkungsgrades verbesserungsfähig. Weiter ist die Herstellung von herkömmlichen Katalysatoren, die auf keramischen Trägern aufgebracht sind, kosten- und zeitaufwendig.

Aufgabe:
Somit ist die Aufgabe der vorliegenden Erfindung das Bereitstellen eines Katalysatorsystems zur Zersetzung von Ozon, das eine hohe katalytische Wirkung aufweist, zeit-/kostengünstig herstellbar ist, sowie eine ausreichende mechanische und thermische Stabilität bei geringem Eigengewicht aufweist.

Beschreibung:
Diese Aufgabe wird durch das Katalysatorsystem nach Anspruch 1 gelöst. Bevorzugte Ausführungsformen des Katalysatorsystems sind in den Unteransprüchen 2 bis 7 definiert, die auch als Kombination untereinander erfindungsgemäß umfasst sind.

Das Katalysatorsystem weist eine wabenförmige Struktur auf, und umfasst eine polymere Matrix und einen ozonzersetzenden Katalysator, der MnO₂-Partikel aufweist.

Die wabenförmige Struktur des Katalysatorsystems ermöglicht eine hohe mechanische Festigkeit bei geringem Gewicht. Dies wird insbesondere durch die Kombination mit der Verwendung einer polymeren Matrix erzielt, da das Katalysatorsystem durch die polymere Matrix im Vergleich zu keramischen Trägern ein reduziertes Eigengewicht besitzt, und trotzdem eine hervorragende Festigkeit erzielt wird.

Aufgrund der Verwendung der polymeren Matrix kann das Katalysatorsystem durch herkömmliche Polymerverarbeitungsprozesse, wie z.B. Extrusion, hergestellt werden, die im Vergleich zur Herstellung von auf keramischen Materialien basierenden Katalysatorträgern geringere Herstellungstemperaturen erfordern, d.h. zeit- /kostengünstiger hergestellt werden können. Die polymere Matrix weist weiter eine hohe chemische Beständigkeit, insbesondere Oxidationsbeständigkeit gegenüber Ozon, sowie eine gute thermische Beständigkeit auf.

Die Wabenstruktur ermöglicht weiter die Ausbildung einer großen Oberfläche bei geringem Gewicht, so dass das Katalysatorsystem eine große Adsorptionsfläche zur Absorption der zu zersetzenden Ozonmoleküle besitzt. Dies wiederum bedingt eine hohe katalytische Aktivität des Katalysatorsystems.

Der ozonzersetzende Katalysator gemäß der vorliegenden Erfindung weist MnO₂-Partikel auf. Die MnO₂-Partikel gemäß der vorliegenden Erfindung besitzen eine hohe katalytische Wirkung, d.h. katalytische Aktivität, bezüglich der Zersetzung von gasförmigem Ozon.

Weiter weisen die MnO₂-Partikel und die polymere Matrix aufgrund ihrer unterschiedlichen Polaritäten nur eine bedingte Kompatibilität auf, was dazu führt, dass die Anzahl der freiliegenden MnO₂-Partikel auf der Oberfläche der polymeren Matrix erhöht wird. Dies wiederum bedingt eine weitere Erhöhung der katalytischen Aktivität des Katalysatorsystems.

Zusätzlich zur ozonzersetzenden Wirkung ist das Katalysatorsystem gemäß der vorliegenden Erfindung in der Lage, weitere organische Verbindungen, die Gerüche erzeugen, abzubauen. Somit ist eine effektive Geruchsminimierung möglich. Weiter besitzt das Katalysatorsystem die Fähigkeit, Mikroorganismen wie z.B. Bakterien zu zersetzen, d.h. eine Desinfektion des durchströmenden Gases zu erzielen. Aufgrund dieser Tatsache ist auch eine Reinigung des Katalysatorsystems in vielen Fällen nicht bzw. nur in großen Zeitabständen nötig.

Erfindungsgemäß werden für die polymere Matrix thermoplastische Polymere verwendet, die eine hervorragende Verarbeitbarkeit wie z.B. mittels Extrusion gewährleisten. Thermoplastische Polymere sind insbesondere Polyolefine, Polyester oder Polyacrylate, die kostengünstig sind, sowie eine gute mechanische Festigkeit aufweisen.

Die polymere Matrix kann zusätzlich zum ozonzersetzenden Katalysator herkömmliche Additive aufweisen, wie Verstärkungsmittel, Flammschutzmittel, Antioxidationsmittel oder Färbemittel. Geeignete Verstärkungsmittel sind z.B. Glasfasern, Talk- oder Kohlenstoffpartikel. Über die Verwendung dieser Additive können die Eigenschaften des Katalysatorsystems im Hinblick auf spezifische Anwendungen maßgeschneidert werden.

Erfindungsgemäß weist der Katalysator zusätzliche Partikel aus, die ausgewählt sind aus der Gruppe, umfassend Metalloxide und Metalle, wie Ag, Ni, Cu, Sn, Pt, Pd, oder Kombinationen davon. Diese Partikel zeigen eine ozonzersetzende Wirkung und können so zusätzlich zu den MnO₂-Partikeln als ozonzersetzende Katalysatoren eingesetzt werden. Weiter weist das Katalysatorsystem Aktivkohle auf, die eine ozonreduzierende Wirkung aufweist. Durch die zusätzliche Anwesenheit dieser Substanzen kann die ozonzersetzende Wirkung des Katalysatorsystems weiter optimiert werden. Insbesondere geeignet ist eine Mischung aus MnO₂-Partikeln mit Aktivkohle und/oder Metallpartikel. Bevorzugte Metallpartikel sind Ag, Ni, Cu, Sn, insbesondere Ag.

De Katalysatorpartikel können einen mittleren Partikeldurchmesser von 0,01 bis 1000 µm, bevorzugt 0,1 bis 100 µm, besonders bevorzugt von 1 bis 10 µm besitzen. Der mittlere Partikeldurchmesser gemäß der vorliegenden Erfindung kann visuell über TEM (Transmissionselektronenmikroskop) bestimmt werden. Dieser Partikeldurchmesserbereich bedingt eine gute Balance zwischen ozonzersetzender Wirkung, guter Verarbeitbarkeit und hoher Dispergierbarkeit in der polymeren Matrix.

Erfindungsgemäß liegt der Katalysator in 0,1 bis 10 Gew.-%, bevorzugt 1 bis 5 Gew.-%, bezogen auf das Gesamtgewicht des Katalysatorsystems, im Katalysatorsystem vor. Eine solche Zusammensetzung des Katalysatorsystems vereint eine gute katalytische Wirksamkeit mit einer kostengünstigen Herstellung, da so gewährleistet wird, dass sich eine ausreichende Menge an Katalysatorpartikeln auf der Oberfläche der polymeren Matrix befindet, um eine hohe katalytische Wirksamkeit zu erzielen.

Die Wabenstruktur besitzt bevorzugt eine Oberfläche von 0,001 bis 10 m²/kg Katalysator, bevorzugt 0,01 bis 1 m²/kg Katalysator. Durch diese hohe Oberfläche wird insbesondere eine hohe katalytische Aktivität bezüglich der Zersetzung von Ozon gewährleistet.

Die Oberfläche des Katalysatorsystems kann weiter erhöht werden, indem eine polymere Matrix mit einer offenen Schaumstruktur verwendet wird. Über diese offene Porenstruktur wird ein Eindringen / Durchdringen des Ozons in das Katalysatorsystem verbessert, so dass die katalytische Wirkung erhöht werden kann, da sich aufgrund der vergrößerten Oberfläche mehr Katalysatorpartikel auf der Oberfläche befinden, und so ihre katalytische Wirkung ausüben können.

Weiter ist bevorzugt, dass die Poren einen mittleren Durchmesser von 0,1 bis 1000 µm, bevorzugt 1 bis 100 µm, besonders bevorzugt 5 bis 10 µm besitzen. Der mittlere Porendurchmesser kann visuell über TEM bestimmt werden. Dies bedingt eine hohe katalytische Aktivität in Verbindung mit einer ausreichenden mechanischen Festigkeit des Katalysatorsystems.

Eine weitere Aufgabe ist das Bereitstellen eines Verfahrens zum Herstellen eines ozonzersetzenden Katalysatorsystems gemäß der Ansprüche 1 bis 7, das zeit-/kostengünstig durchgeführt werden kann, wobei das Katalysatorsystems eine hohe katalytische Wirkung aufweist, sowie eine ausreichende mechanische und thermische Stabilität bei geringem Eigengewicht aufweist.

Diese Aufgabe wird durch das Verfahren zum Herstellen des Katalysatorsystems nach Anspruch 8 gelöst. Das Verfahren umfasst die Schritte (a) Mischen einer polymeren Matrix mit einem ozonzersetzenden Katalysator, der MnO₂-Partikel aufweist, und (b) Formen der Mischung in eine wabenförmige Struktur.

Aufgrund der polymeren Matrix eine ist eine gute Formbarkeit in eine Wabenstruktur gegeben, so die wabenförmige Katalysatorstruktur schnell und kostengünstiger hergestellt werden kann.

Erfindungsgemäß erfolgt aufgrund des Mischens eine annähernd homogene Mischung der MnO₂-Partikel in der polymeren Matrix. Aufgrund der unterschiedlichen Polarität der polymeren Matrix und der anorganischen Katalysatorpartikel wird aber auch gewährleistet, dass sich eine ausreichende Menge der MnO₂-Partikel auf der Oberfläche des Katalysatorsystems befinden, was eine gute katalytische Aktivität bedingt.

Der Mischungsschritt (a) kann durch jedes herkömmliche Mischungsverfahren erfolgen. Bevorzugt erfolgt die Mischung über einen Extrusionsprozess. Der Formungsschritt (b) kann durch jedes herkömmliche Formgebungsverfahren erfolgen. Bevorzugt ist das Formgebungsverfahren ein Spritzgussprozess.

Die oben beschriebenen Additive können z.B. im Verfahrensschritt (a) zugegeben werden. Weiter sind hier physikalische und/oder chemische Schäumungsmittel umfasst, die eine offene Porenstruktur der Katalysatormatrix erzeugen.

Das Katalysatorsystem gemäß der vorliegenden Erfindung kann in eine Filtervorrichtung integriert werden.

Bevorzugte Anwendungen dieser Filtervorrichtungen sind insbesondere Filtervorrichtungen für elektrischen Herde oder Backöfen, sowie für Dunstabzugshauben für Kochstellen. Die Filtervorrichtung befindet sich dabei bevorzugt in der Ab- und/oder Zulaufleitung.

Die vorliegende Erfindung umfasst weiter die Verwendung eines Katalysatorsystems wie oben beschrieben, zur Zersetzung von Substanzen, ausgewählt aus der Gruppe umfassend Ozon, organischen Verbindungen, Mikroorganismen oder Kombinationen davon.

## Patentansprüche

1. Katalysatorsystem mit einer wabenförmigen Struktur, umfassend eine polymere Matrix und einen ozonzersetzenden Katalysator, der MnO₂ Partikel aufweist,
wobei der Katalysator weiter Partikel aufweist, die ausgewählt sind aus der Gruppe, umfassend Metalloxide und Metalle wie Ag, Ni, Cu, Sn, Pt, Pd, oder Kombinationen davon,
wobei das Katalysatorsystem weiter Aktivkohle aufweist,
wobei der Katalysator in 0,1 bis 10 Gew.-% bezogen auf das Gesamtgewicht des Katalysatorsystems, vorliegt,
wobei das Polymer ausgewählt ist aus der Gruppe, umfassend Polyolefine, Polyester, Polyacrylate, oder Kombinationen davon.

2. Katalysatorsystem gemäß Anspruch 1 , wobei die polymere Matrix weiter Additive umfasst, die ausgewählt sind aus der Gruppe, umfassend Verstärkungsmittel wie Glasfasern, Talk, oder Kohlenstoffpartikel, Flammschutzmittel, Antioxididationsmittel oder Färbemittel, oder Kombinationen davon.

3. Katalysatorsystem gemäß den Ansprüchen 1 oder 2, wobei die Katalysatorpartikel einen mittleren Partikeldurchmesser von 0,01 bis 1000 µm, bevorzugt 0, 1 bis 100 µm, besonders bevorzugt von 1 bis 10 µm, besitzen.

4. Katalysatorsystem gemäß den Ansprüchen 1 bis 3, wobei der Katalysator in 1 bis 5 Gew.-%, bezogen auf das Gesamtgewicht des Katalysatorsystems, vorliegt.

5. Katalysatorsystem gemäß den Ansprüchen 1 bis 4, wobei die Wabenstruktur eine Oberfläche von 0,001 bis 10m²/kg Katalysator, bevorzugt 0,01 bis 1m²/kg Katalysator besitzt.

6. Katalysatorsystem gemäß den Ansprüchen 1 bis 5, wobei die polymere Matrix eine offene Porenstruktur aufweist.

7. Katalysatorsystem gemäß Anspruch 6, wobei die Poren einen mittleren Durchmesser von 0,1 bis 1000 µm, bevorzugt 1 bis 100 µm, besonders bevorzugt von 5 bis 10 µm, besitzen.

8. Verfahren zum Herstellen eines Katalysatorsystems gemäß den Ansprüchen 1 bis 7, umfassend die Schritte: (a) Mischen einer polymeren Matrix mit einem ozonzersetzenden Katalysator, der MnO₂ Partikel aufweist, (b) Formen der Mischung eine wabenförmige Struktur.

9. Filtervorrichtung, umfassend das Katalysatorsystem gemäß den Ansprüchen 1 bis 7.

10. Verwendung eines Katalysatorsystems gemäß den Ansprüchen 1 bis 7, zur Zersetzung von Substanzen, ausgewählt aus der Gruppe umfassend Ozon, organische Verbindungen, Mikroorganismen, oder Kombinationen davon, insbesondere in einer Filtervorrichtung.

## Claims

1. Catalyst system with a honeycomb-shaped structure, comprising a polymer matrix and an ozone-decomposing catalyst which has MnO₂ particles,
wherein the catalyst furthermore has particles which are selected from the group comprising metal oxides and metals, such as Ag, Ni, Cu, Sn, Pt, Pd, or combinations thereof,
wherein the catalyst system furthermore has activated carbon,
wherein the catalyst is present at 0.1 to 10 % by weight in relation to the overall weight of the catalyst system,
wherein the polymer is selected from the group comprising polyolefins, polyester, polyacrylate, or combinations thereof.

2. Catalyst system according to claim 1, wherein the polymer matrix comprises further additives, which are selected from the group comprising reinforcing agents such as glass fibres, talc, or carbon particles, flame protection agents, antioxidising agents or colouring agents, or combinations thereof.

3. Catalyst system according to claims 1 or 2, wherein the catalyst particles have an average particle diameter of from 0.01 to 1000 µm, preferably 0.1 to 100 µm, particularly preferably from 1 to 10 µm.

4. Catalyst system according to claims 1 to 3, wherein the catalyst is present at 1 to 5 % by weight in relation to the overall weight of the catalyst system.

5. Catalyst system according to claims 1 to 4, wherein the honeycomb structure has a surface of from 0.001 to 10m²/kg catalyst, preferably 0.01 to 1m²/kg catalyst.

6. Catalyst system according to claims 1 to 5, wherein the polymer matrix has an open pore structure.

7. Catalyst system according to claim 6, wherein the pores have an average diameter of from 0.1 to 1000 µm, preferably 1 to 100 µm, particularly preferably from 5 to 10 µm.

8. Method for producing a catalyst system according to claims 1 to 7, comprising the steps: (a) mixing a polymer matrix with an ozone-decomposing catalyst, which has MnO₂ particles, (b) shaping the mixture into a honeycomb-shaped structure.

9. Filter apparatus, comprising the catalyst system according to claims 1 to 7.

10. Use of a catalyst system according to claims 1 to 7, for decomposition of substances, selected from the group comprising ozone, organic compounds, microorganisms, or combinations thereof, in particular in a filter apparatus.

## Revendications

1. Système de catalyseur présentant une structure alvéolaire, comprenant une matrice polymère et un catalyseur décomposant l'ozone, lequel comporte des particules de MnO₂, dans lequel le catalyseur comporte en outre des particules, lesquelles sont sélectionnées parmi le groupe comprenant des oxydes de métal et des métaux comme l'Ag, le Ni, le Cu, le Sn, le Pt, le Pd ou des combinaisons de ceux-ci,
dans lequel le système de catalyseur comporte en outre du charbon actif,
dans lequel le catalyseur est présent à raison de 0,1 à 10% en poids, sur base du poids total du système de catalyseur,
dans lequel le polymère est sélectionné parmi le groupe comprenant des polyoléfines, polyesters, polyacrylates ou des combinaisons de ceux-ci.

2. Système de catalyseur selon la revendication 1, dans lequel la matrice polymère comprend en outre des additifs, lesquels sont sélectionnés parmi le groupe comprenant des agents de renforcement comme des fibres de verre, du talc ou des particules de carbone, des agents de protection contre les flammes, des agents anti-oxydation ou des colorants, ou des combinaisons de ceux-ci.

3. Système de catalyseur selon les revendications 1 ou 2, dans lequel les particules de catalyseur présentent un diamètre particulaire moyen allant de 0,01 à 1000 µm, de préférence de 0,1 à 100 µm, de manière particulièrement préférée de 1 à 10 µm.

4. Système de catalyseur selon les revendications 1 à 3, dans lequel le catalyseur est présent à raison de 1 à 5% en poids, sur base du poids total du système de catalyseur.

5. Système de catalyseur selon les revendications 1 à 4, dans lequel la structure alvéolaire présente une surface allant de 0,001 à 10m²/kg de catalyseur, de préférence de 0,01 à 1m²/kg de catalyseur.

6. Système de catalyseur selon les revendications 1 à 5, dans lequel la matrice polymère comporte une structure de pores ouverte.

7. Système de catalyseur selon la revendication 6, dans lequel les pores ont un diamètre moyen allant de 0,1 à 1000 µm, de préférence de 1 à 100 µm, de manière particulièrement préférée de 5 à 10 µm.

8. Procédé de fabrication d'un système de catalyseur selon les revendications 1 à 7, comprenant les étapes suivantes : (a) mélange d'une matrice polymère avec un catalyseur décomposant l'ozone, lequel comporte des particules de MnO₂, (b) façonnage du mélange en une structure alvéolaire.

9. Dispositif filtrant comprenant le système de catalyseur selon les revendications 1 à 7.

10. Utilisation d'un système de catalyseur selon les revendications 1 à 7, pour la décomposition de substances sélectionnées parmi le groupe comprenant de l'ozone, des composés organiques, des microorganismes ou des combinaisons de ceux-ci, en particulier dans un dispositif filtrant.
